Europäisches Patentamt

(19) European Patent Office

Office européen des brevets

(11) Numéro de publication : **0 321 324 B1**

(12) **FASCICULE DE BREVET EUROPEEN**

(45) Date de publication du fascicule du brevet :
02.10.91 Bulletin 91/40

(21) Numéro de dépôt : **88403119.6**

(22) Date de dépôt : **08.12.88**

(51) Int. Cl.⁵ : **F16F 9/49**

(54) Vérin de suspension hydropneumatique de véhicule automobile.

(30) Priorité : **10.12.87 FR 8717520**

(43) Date de publication de la demande :
**21.06.89 Bulletin 89/25**

(45) Mention de la délivrance du brevet :
**02.10.91 Bulletin 91/40**

(84) Etats contractants désignés :
**DE GB IT**

(56) Documents cités :
**EP-A- 0 118 335**
**DE-B- 1 251 165**
**FR-A- 2 479 389**
**GB-A- 1 132 038**
**US-A- 3 036 669**
**US-A- 3 150 747**
**US-A- 3 461 991**
**US-A- 3 945 626**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Richard, Denis**
**65, rue Mirabeau**
**F-94600 Choisy le Roi (FR)**

(74) Mandataire : **Boivin, Claude et al**
**9, rue Edouard-Charton**
**F-78000 Versailles (FR)**

EP 0 321 324 B1

## Description

La présente invention concerne un vérin porteur pour suspension hydropneumatique de véhicule automobile qui comprend un cylindre articulé à un bras support de roue et dans lequel est monté coulissant un piston articulé à la structure du véhicule, la tige de ce piston étant munie d'un alésage axial relié hydrauliquement à un accumulateur hydropneumatique.

On sait que les vérins porteurs, du type défini ci-dessus sont généralement munis d'une butée de détente, la suspension étant par ailleurs munie d'une butée d'attaque, extérieure au vérin, ces butées d'attaque et de détente étant destinées à limiter dans un sens et dans l'autre le débattement du vérin.

Les butées d'attaque et de détente sont généralement en élastomère ; elles sont définies de telle sorte que l'amortissement avant l'écrasement de la butée et celui pendant cet écrasement se raccordent d'une manière continue, de manière à éviter un choc quand la limite d'écrasement est atteinte.

L'invention a pour but de réaliser un vérin de suspension dans lequel l'énergie lors d'un choc est absorbée de manière progressive en évitant le rebondissement de la roue.

Le document DE-B-1251165 décrit un vérin de suspension dans lequel les butées d'attaque et de détente sont hydrauliques et progressives et qui comporte des moyens de retour rapide. Mais ce vérin présente des difficultés de fonctionnement auxquelles remédie l'invention.

Le vérin selon l'invention est caractérisé en ce que la butée d'attaque comporte un gicleur situé dans le fond du cylindre du côté opposé à la tige du piston, et un diaphragme pouvant être entraîné par le piston à l'encontre de moyens élastiques de manière à étrangler progressivement, quand le piston s'enfonce dans le cylindre, l'échappement du liquide vers l'accumulateur, et en ce que la butée de détente comporte un gicleur clippé sur le palier supérieur du cylindre et dans lequel coulisse la tige du piston en étranglant progressivement l'échappement du liquide annulaire entre un diaphragme et le gicleur de détente.

D'autres caractéristiques du vérin objet de l'invention apparaîtront dans la description d'un exemple de réalisation donnée ci-après, à titre d'exemple non limitatif, avec référence aux dessins annexés dans lesquels :

La Figure 1 montre un essieu comportant un vérin de suspension selon l'invention ;

La Figure 2 est une vue en coupe axiale du vérin, brisée à angle droit suivant II-II de la Figure 3 dans la partie inférieure au plan III-III ;

La Figure 3 en est une coupe transversale suivant III-III de la Figure 2 ;

La Figure 4 en est une coupe transversale suivant IV-IV de la Figure 2.

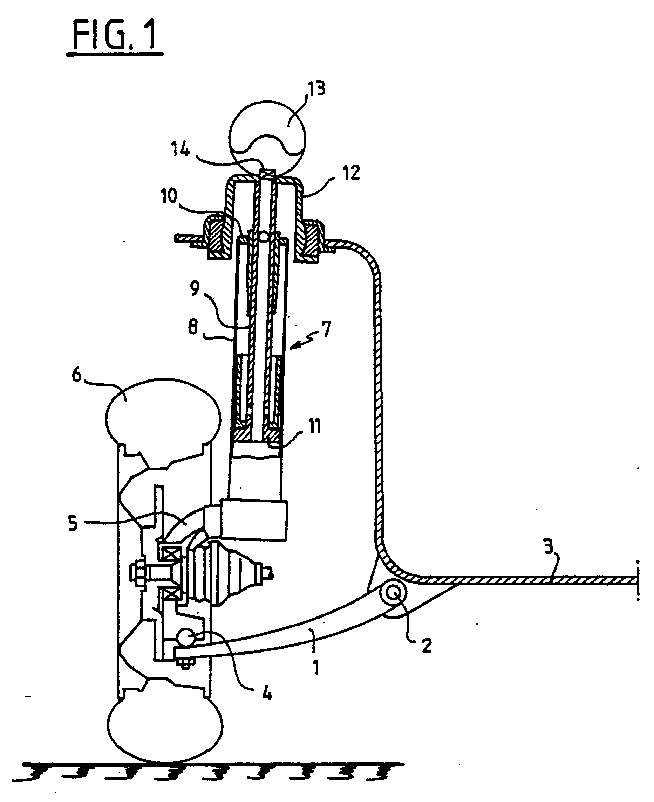

A la Figure 1, on voit un essieu comprenant un bras de support de roue 1 qui est articulé en 2 sur la caisse 3 d'un véhicule ; ce support est relié par une rotule 4 à un pivot de roue 5 sur lequel est montée la roue 6. Un vérin de suspension 7 relie le pivot de roue 5 à la caisse 3. Ce vérin comprend un cylindre 8 qui est fixé au pivot de roue et un piston tubulaire 9 qui est monté coulissant dans le cylindre par l'intermédiaire d'un palier supérieur 10 fixé au cylindre et un palier inférieur 11 fixé au piston. La partie supérieure de ce dernier est reliée à la caisse 3 par un appui élastique 12 faisant rotule de façon à encaisser les variations angulaires dues au débattement de la roue. L'intérieur du piston est en communication avec un accumulateur hydropneumatique 13 par l'intermédiaire d'un amortisseur 14.

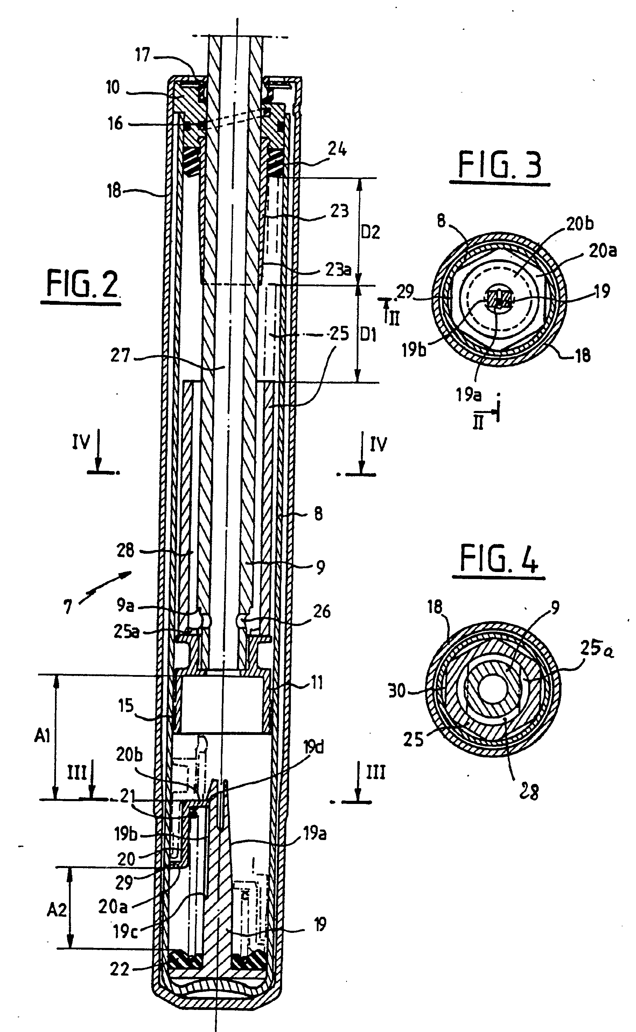

Comme on le voit plus particulièrement à la Figure 2, le palier inférieur 11 est vissé sur le piston 9 et est muni d'un segment d'étanchéité 15. Le palier supérieur 10 est muni d'un joint composite incliné 16 qui compense les efforts appliqués au palier dans le but de diminuer les frottements de coulissement, et d'un joint à double-lèvre 17 qui fait office de racleur. L'ensemble du cylindre 8 et du palier supérieur 10 est maintenu en place dans un tube enveloppe 18 par sertissage.

Dans le fond du cylindre se trouve le dispositif de butée progressive d'attaque. Ce dispositif comprend un pointeau faisant office de gicleur 19 dont la partie supérieure a une section rectangulaire ; deux de ses faces opposées 19a sont pentées alors que les deux autres faces présentent chacune un méplat vertical 19b délimité par un épaulement amont 19c et un épaulement aval 19d. Le dispositif d'attaque comprend également un diaphragme 20 encliqueté sur le gicleur. Ce diaphragme présente une embase ou collerette 20a de section polygonale et un trou axial qui est délimité à sa partie supérieure par une collerette 20b au contact des méplats 19b. Un ressort 21 est interposé entre une butée d'appui en caoutchouc 22 et la collerette 20b qui est ainsi maintenue en appui contre l'épaulement aval 19d du gicleur. L'ensemble formé par le gicleur et le diaphragme est normalement plaqué sur le fond du cylindre 8 sous l'effet de son propre poids.

Le dispositif de butée progressive de détente comprend un manchon creux faisant fonction de gicleur qui est clipsé dans une gorge du palier supérieur 10 et verrouillé par la présence du piston 9 dans ce palier ; la partie inférieure 23a du gicleur est extérieurement tronconique. Une butée d'appui en élastomère 24 est accostée sur un bourrelet prévu à la partie haute du gicleur. Le dispositif de butée comprend également un manchon cylindrique 25 faisant fonction de diaphragme, de section hexagonale qui est monté coulissant dans le cylindre 8 et repose en temps normal sur le palier inférieur 11, sous l'effet de son poids. Ce diaphragme comporte à sa base un talon 25a qui est engagé sur un méplat du piston 9 et peut venir buter contre un épaulement 9a limitant ce méplat, ce qui limite le déplacement du diaphragme vers le haut. Le piston comporte, à un niveau inférieur à celui de l'épaulement 9a un trou 26 qui met en communication l'espace intérieur 27 du piston 9 avec l'espace annulaire 28 existant entre ce piston et le diaphragme 25.

Le fonctionnement du vérin de suspension 7 est le suivant. En attaque, si à partir d'une position moyenne, le piston 9 se déplace vers le fond du cylindre 8, l'huile qui se trouve dans l'espace intérieur 27 du piston est dirigée vers l'accumulateur 13 alors que l'huile se trouvant dans l'espace annulaire 28 y parvient après avoir d'abord traversé le trou 26. Le volume se dirigeant vers l'accumulateur est le seul à traverser l'amortisseur 14. Après une course A1, le palier inférieur 11 vient au contact de la collerette 20b du diaphragme 20 en assurant l'étanchéité comme indiqué en traits mixtes à la Figure 2.

L'attaque continuant, le diaphragme est entraîné par le palier 11 et coulisse sur le gicleur 19. L'huile emprisonnée dans le fond du cylindre est laminée entre les faces en pente 19a du gicleur et le diaphragme ; la fuite se réduit progressivement en fonction de l'enfoncement. Lorsque, après une course A2, le piston 9 arrive à fond de course et que l'énergie cinétique a été absorbée par le laminage progressif de l'huile se trouvant dans le fond du cylindre, la base du diaphragme 20 se trouve alors en appui sur la butée élastique 22, ce qui limite l'attaque d'une façon précise.

Après une course d'attaque, il faut que le piston 9 retrouve rapidement sa position initiale de façon que, si un autre obstacle se présente, l'amortissement à fond de course soit de nouveau en mesure d'absorber l'énergie. Ce retour rapide s'effectue de la façon suivante : pour réalimenter la chambre du fond de cylindre, l'huile doit passer par la fuite entre le gicleur 19 et le diaphragme 20. Comme cette fuite est réduite, le diaphragme 20 est freiné dans sa remontée. Si la remontée du piston 9 est plus rapide, il y a séparation entre le palier inférieur 11 et le diaphragme 20. La réalimentation s'effectue alors par les passages 29 des six pans aménagés à la base du diaphragme qui peut rapidement retrouver sa position initiale.

En détente, si à partir d'une position moyenne, la roue tombe dans un trou, le piston 9 se déplace vers le haut du cylindre. L'huile sort de l'accumulateur 13 et, par le trou 26, dans l'espace annulaire 28 pour entrer dans l'espace 27. Le volume d'huile venant de l'accumulateur est le seul à traverser l'amortisseur 14. Après une course D1, la partie supérieure du diaphragme 25 se trouve dans le même plan que la partie inférieure du gicleur 23, comme indiqué en traits mixtes à la Figure 2.

La détente continuant, il y a laminage de l'huile entre le gicleur 23 et le diaphragme 25. Cette fuite se réduit progressivement en fonction de l'élongation. Lorsque le piston arrive à fond de course, après une course D2, et que l'énergie cinétique a été absorbée par le laminage progressif de l'huile se trouvant dans la partie supérieure du cylindre, le diaphragme 25 vient en appui sur la butée élastique 24, ce qui limite la course de détente de façon précise. Après une course de détente, il faut que le véhicule retrouve rapidement son assiette. Le retour rapide s'effectue de la façon suivante : pour réalimenter la chambre du haut du cylindre, l'huile doit passer par la fuite entre le gicleur 23 et le diaphragme 25. Comme cette fuite est très réduite, le diaphragme 25 est freiné dans sa descente. Si la descente du piston est plus rapide, il y a séparation entre le palier inférieur 11 et le diaphragme 25. La réalimentation de la chambre supérieure du vérin s'effectue alors par les passages 30 des six pans aménagés tout le long du diaphragme 25 qui est entraîné par l'intermédiaire de son talon 25a en appui sur l'épaulement 9a du piston.

Le dispositif de butées d'attaque et de détente qui vient d'être décrit permet d'absorber l'énergie en évitant le rebondissement de la roue qui est préjudiciable au confort des passagers. De plus, tous les composants sont en matière plastique et d'un dessin très simple, donc peu chers. Ils sont intégrés à l'intérieur de l'élément porteur, ce qui donne un encombrement réduit de celui-ci.

## Revendications

1. Vérin de suspension hydropneumatique de véhicule automobile qui comprend un cylindre (8) articulé à un bras de support de roue (1), dans lequel est monté coulissant un piston (9) articulé à la structure (3) du véhicule, la tige de ce piston étant munie d'un alésage axial relié hydrauliquement à un accumulateur hydropneumatique (13) et qui comporte, incorporés au cylindre (8), des moyens de butée d'attaque et de détente hydrauliques progressifs ainsi que des moyens de retour rapide, caractérisé en ce que la butée d'attaque comporte un gicleur (19) situé dans le fond du cylindre (8) du côté opposé à la tige du piston (9), et un diaphragme (20) pouvant être entraîné par le piston à l'encontre de moyens élastiques (21) de manière à étrangler progressivement, quand le piston s'enfonce dans le cylindre, l'échappement du liquide vers l'accumulateur (13), et en ce que la butée de détente comporte un gicleur (23) clippé sur le palier supérieur (10) du cylindre et dans lequel coulisse la tige du piston en étranglant progressivement l'échappement du liquide annulaire entre un diaphragme (25) et le gicleur (23).

2. Vérin selon la revendication 1, caractérisé en ce que le diaphragme (20) comporte un trou axial traversé par le gicleur (19) qui est lui-même muni d'une ou plusieurs faces pentées (19a) définissant avec le diaphragme (20) une fuite progressive étranglée.

3. Vérin selon la revendication 1 ou 2, caractérisé en ce que le gicleur (19) comporte un méplat vertical (19b) limité par un épaulement amont (19c) et un épaulement aval (19d) pour caler circulairement le diaphragme (20) et limiter sa course.

4. Vérin selon l'une des revendications 1 à 3, caractérisé en ce que le diaphragme (20) comporte une collerette hexagonale (20a) en appui sur la paroi intérieure du cylindre (8), pour assurer son centrage et permettre une libre circulation du liquide.

5. Vérin selon l'une des revendications 1 à 4, caractérisé en ce que le diaphragme (25) est cylindrique et présente un profil extérieur hexagonal en appui sur la paroi intérieure du cylindre (8) pour assurer son centrage et son guidage et permettre une libre circulation du liquide.

6. Vérin selon l'une des revendications 1 à 5, caractérisé en ce que le diaphragme cylindrique (25) est muni d'un talon (25a) en appui sur un méplat extérieur de la tige du piston, ce méplat étant limité par un épaulement (9a) de manière à orienter le diaphrame et limiter son débattement par rapport au piston.

**Patentansprüche**

1. Hydropneumatisches Federbein für Kraftfahrzeuge mit einem Zylinder (8), der gelenkig mit einem Tragarm (1) des Rades verbunden ist und in dem gleitend ein Kolben (9) montiert ist, der gelenkig mit dem Fahrzeugrahmen (3) verbunden ist, wobei die Kolbenstange dieses Kolbens mit einer axialen Bohrung versehen ist, die hydraulisch mit einem hydropneumatischen Druckspeicher (13) verbunden ist und mit in den Zylinder (8) eingebauten hydraulischen progressiven Anschlagmitteln für den Angriff und die Entspannung sowie mit Mitteln zur Eilrückstellung, dadurch gekennzeichnet, daß der Angriffsanschlag eine Düse (19) aufweist, die auf dem Grund des Zylinders (8) an der der Kolbenstange (9) gegenüberliegenden Seite angeordnet ist sowie einen Blendenschieber (20), der vom Kolben entgegen der Einwirkung elastischer Mittel (21) mitgenommen werden kann derart, daß das Ausströmen der Flüssigkeit in Richtung auf den Druckspeicher (13) zunehmend gedrosselt wird, wenn der Kolben in den Zylinder eintaucht und daß der Entspannungsanschlag eine Düse (23) aufweist, die an das obere Lager (10) des Zylinders angeklemmt ist und in der die Kolbenstange gleitet, wodurch das Ausströmen des ringförmigen Flüssigkeitsstromes zwischen einer Blende (25) und der Düse (23) zunehmend gedrosselt wird.

2. Federbein nach Anspruch 1, dadurch gekennzeichnet, daß der Blendenschieber (20) ein von der Düse (19) durchsetztes axiales Loch aufweist und die Düse (19) mit einer oder mehreren geneigten Flächen (19a) versehen ist, die zusammen mit dem Blendenschieber (20) einen zunehmend gedrosselten Durchlaß abgrenzen.

3. Federbein nach Anspruch 1 oder 2, dadurch gekennzeichnet, daß die Düse (19) eine vertikale Abflachung (19b) aufweist, die von einer stromaufwärts gelegenen Schulter (19c) und einer stromabwärts gelegenen Schulter (19d) begrenzt wird, zur Verkeilung des Blendenschiebers (20) in Umfangsrichtung und zur Begrenzung seiner Bewegungsbahn.

4. Federbein nach einem der Ansprüche 1 bis 3, dadurch gekennzeichnet, daß der Blendenschieber (20) einen sechseckigen Kragen (20a) trägt, der sich an der Innenwand des Zylinders (8) abstützt, um seine Zentrierung sicherzustellen und eine freie Zirkulation der Flüssigkeit zu ermöglichen.

5. Federbein nach einem der Ansprüche 1 bis 4, dadurch gekennzeichnet, daß die Blende (25) zylindrisch ausgebildet ist und ein sechseckiges Außenprofil aufweist, das sich an der Innenwand des Zylinders (8) abstützt, um ihre Zentrierung und ihre Führung sicherzustellen und eine freie Zirkulation der Flüssigkeit zu ermöglichen.

6. Federbein nach einem der Ansprüche 1 bis 5, dadurch gekennzeichnet, daß die zylindrische Blende (25) mit einem Ansatz (25a) versehen ist, der sich an einer äußeren Abflachung der Kolbenstange abstützt, wobei diese Abflachung durch eine Schulter (9a) begrenzt ist derart, daß die Blende ausgerichtet und ihre Verschiebbarkeit in Bezug auf den Kolben begrenzt ist.

**Claims**

1. Motor vehicle hydropneumatic suspension jack including a cylinder (8) joined to a wheel support arm (1) in which a piston (9) is sliding-mounted joined to the structure (3) of the vehicle, the rod of this piston being provided with an axial bore hydraulically connected to a hydropneumatic accumulator (13) and which comprises attack and progressive hydraulic stress relief means incorporated in the cylinder, as well as fast return means, wherein the attack stop comprises a nozzle (19) situated at the bottom of the cylinder (8) on the side opposite the rod of the piston (9), and a diaphragm (20) able to be driven by the piston against elastic means (21) so as, when the piston is driven into the cylinder, to progressively choke escape of the liquid towards the accumulator (13), and wherein the stress relief stop comprises a nozzle (23) clipped onto the upper bearing (10) of the cylinder and in which the rod of the piston slides, thus progressively choking escape of the annular liquid between a diaphragm (25) and the nozzle (23).

2. Jack according to claim 1, wherein the diaphragm (20) comprises an axial hole traversed by the nozzle (19) provided with one or several slanted faces (19a) defining, along with the diaphragm (20), a progressive choked leak.

3. Jack according to claim 1 or 2, wherein the nozzle (19) comprises a vertical flat spot (19b) limited by one upstream shoulder (19c) and one downstream shoulder (19d) so as to circularly adjust the diaphragm (20) and limit its travel.

4. Jack according to any one of claims 1 to 3, wherein the diaphragm (20) comprises a hexagonal collar (20a) in support on the internal wall of the cylinder (8) so as to ensure its centering and allow the liquid to freely circulate.

5. Jack according to any one of claims 1 to 4, wherein the diaphragm (25) is cylindrical and has an outer hexagonal profile in support on the internal wall of the cylinder (8) so as to ensure its cantering and guidance and allow the liquid to freely circulate.

6. Jack according to any one of claims 1 to 5, wherein the cylindrical diaphragm (25) is provided with a heel (25a) in support on a flat spot outside the rod of the piston, this flat spot being limited by a shoulder (9a) so as to orientate the diaphragm and limit its movement with respect to the piston.

# FIG. 1

FIG.2

FIG.3

FIG.4